# EUROPÄISCHE PATENTANMELDUNG

(11) **EP 2 541 044 A1**
(43) Veröffentlichungstag der Anmeldung: **02.01.2013**
(21) Anmeldenummer: 11172142.9
(22) Anmeldetag: 30.06.2011
(51) Int. Cl.: F03B 9/00, F03B 13/00, F03B 13/06

(54) **Anlage und Verfahren zum Transportieren mindestens eines Teils eines Abbau- oder Abfallprodukts einer Mine, sowie Verwendung**

(71) Anmelder: SIEMENS AKTIENGESELLSCHAFT, 80333 München (DE)
(72) Erfinder: Santana, Fernando, 2520000 Viña del Mar (CL); Zeng, Yun, 91052 Erlangen (DE); Chavez Guzman, Ernesto Senefelder, 12 Lima (PE); Schmidt, Frank, 90489 Nürnberg (DE)

(57) **Zusammenfassung**

Die Erfindung betrifft eine Anlage und ein Verfahren zum Transportieren mindestens eines Teils eines Abbau- oder Abfallprodukts einer Mine von einem ersten Anlagenniveau über eine Gefällestrecke auf mindestens ein tiefer gelegenes zweites Anlagenniveau, wobei das Abbau- oder Abfallprodukt auf dem ersten Anlagenniveau in Form einer Suspension vorliegt. Die Anlage umfasst dabei mindestens eine Trennvorrichtung zum Trennen der Suspension in einen überwiegend Feststoff enthaltenden Feststoffteil und einen überwiegend Flüssigkeit enthaltenden Flüssigteil im Bereich des ersten Anlagenniveaus, sowie mindestens eine mechanische Fördereinrichtung zur Aufnahme des Feststoffteils im Bereich des ersten Anlagenniveaus, welche eingerichtet ist, den Feststoffteil auf das mindestens eine zweite Anlagenniveau zu transportieren und die dabei freiwerdende potentielle Energie des Feststoffteils in elektrische Energie umzuwandeln, und/oder mindestens ein Rohrleitungssystem, welches eingerichtet ist, den Flüssigteil zur weiteren Verwendung zumindest teilweise der Mine wieder zuzuführen und/oder den Flüssigteil zumindest teilweise vom ersten Anlagenniveau auf das mindestens eine zweite Anlagenniveau zu transportieren, wobei das Rohrleitungssystem mindestens eine Generatorstation mit einer von dem Flüssigteil antreibbaren Strömungsmaschine umfasst, welche mit einem Generator zum Erzeugen weiterer elektrischer Energie verbunden ist.

## Beschreibung

Die Erfindung betrifft eine Anlage und ein Verfahren zum Transportieren mindestens eines Teils eines Abbau- oder Abfallprodukts einer Mine von einem ersten Anlagenniveau über eine Gefällestrecke auf mindestens ein tiefer gelegenes zweites Anlagenniveau, wobei das Abbau- oder Abfallprodukt auf dem ersten Anlagenniveau in Form einer Suspension vorliegt.

In vielen Bergbauländern, wie beispielsweise Chile oder Peru, liegen die Minen, in denen Rohstoffe abgebaut werden, in großer Höhe. Eine Lage einer Mine auf einer Höhe von 2000 m bis 5000 m über dem Meeresspiegel ist hier keine Seltenheit. Der dort abgebaute Rohstoff wird üblicherweise bereits im Bereich der Mine aufbereitet, insbesondere aufkonzentriert und/oder aufgemahlen. Dabei kommen beispielsweise Kugelmühlen, Flotationsanlagen usw. zum Einsatz.

Unter einem Abbauprodukt wird hier ein Stoffstrom verstanden, der einen gewünschten abzubauenden Wertstoff enthält. Ein Abbauprodukt kann demnach sowohl ein unmittelbar aus der Mine stammender Stoffstrom sein, der noch keinerlei Trennprozessen unterzogen wurde, als auch ein Wertstoffstrom, von welchem bereits ein Abfallstrom bzw. ein Abfallprodukt abgetrennt wurde, das im wesentlichen keinen oder keine nennenswerten Mengen an Wertstoff mehr enthält.

Das Abbauprodukt bzw. auch bei der Aufbereitung entstehende Abfallprodukte liegen häufig als Suspensionen vor, die oft über Rohrleitungssysteme in tiefer gelegene Gebiete abtransportiert und dort weiterverarbeitet oder endgelagert werden. Dabei legt eine solche Suspension oft bis zu mehreren tausend Höhenmetern zurück. In Chile sind mehrere dieser sogenannten "slurry pipelines" in Betrieb. Dabei beträgt die Transportkapazität derartiger Pipelines etwa 2,5 Mio. Tonnen Suspension pro Jahr oder mehr.

Eine derartige Anlage bzw. ein derartiges Verfahren ist beispielsweise aus der WO 2009/092633 A2 bekannt. Hier wird eine Erzpulpe in einem, entlang einer Gefällestrecke angeordneten Rohrleitungssystem transportiert, wobei die beim Transport frei werdende potentielle Energie der Erzpulpe ausgenutzt wird, um elektrische Energie zu erzeugen. Dazu wird die Erzpulpe auf ihrem Weg nach unten über eine Strömungsmaschine, welche mit einem Generator verbunden ist, geleitet. Die von der Erzpulpe angetriebene Strömungsmaschine treibt ihrerseits den Generator an, welcher die elektrische Energie erzeugt.

Es hat sich allerdings gezeigt, dass Suspensionen mit einem hohen Feststoffanteil, insbesondere im Bereich von größer als etwa 30 Gew.-%, insbesondere im Bereich von etwa 60 Gew.-%, zu einem hohen abrasiven Verschleiß im Bereich der Rohrleitung und der Strömungsmaschine(n) führen. Im schlimmsten Fall kann der Verschleiß zu einer Leckage führen, so dass die Suspension unkontrolliert in die Umgebung gelangt. So müssen die mit der Suspension in direktem Kontakt stehenden Bauteile regelmäßig gewartet und bei Bedarf ausgetauscht werden. Die Kosten für die Instandhaltung der Anlagen sind derzeit relativ hoch, so dass die Rentabilität der Anlagen eher gering ist.

Weiterhin werden derzeit Abfallprodukte des Minenbetriebs, wie die sogenannten "tailings", die etwa 40 Gew.-% Wasser und 60 Gew.-% Feststoff enthalten, über Pipelines in Speichereinrichtungen wie Stauseen oder Speicherbecken, die sogenannten "tailing dams", geleitet, wo die enthaltenen Feststoffteilchen sich absetzen. Ein derartiger "tailing dam" kann bis zu ca. 80km oder mehr von der Mine entfernt angeordnet sein. Das sich an der Oberfläche bildende klare Wasser wird von den Minenbetreibern häufig wieder zur Mine gepumpt, um es wiederzuverwenden. Allerdings wird für den Pumpvorgang, je nach Position der Speichereinrichtungen im Hinblick auf die Mine, unter Umständen eine enorme Menge an Energie verbraucht.

Es ist daher Aufgabe der Erfindung, eine Anlage und ein Verfahren zum Transportieren mindestens eines Teils eines Abbau-oder Abfallprodukts einer Mine bereitzustellen, welche(s) kostengünstig betrieben werden kann.

Die Aufgabe wird für die Anlage zum Transportieren mindestens eines Teils eines Abbau- oder Abfallprodukts einer Mine von einem ersten Anlagenniveau über eine Gefällestrecke auf mindestens ein tiefer gelegenes zweites Anlagenniveau, wobei das Abbau- oder Abfallprodukt auf dem ersten Anlagenniveau in Form einer Suspension vorliegt, gelöst, indem sie folgendes umfasst:
- mindestens eine Trennvorrichtung zum Trennen der Suspension in einen überwiegend Feststoff enthaltenden Feststoffteil und einen überwiegend Flüssigkeit enthaltenden Flüssigteil im Bereich des ersten Anlagenniveaus, sowie
- mindestens eine mechanische Fördereinrichtung zur Aufnahme des Feststoffteils im Bereich des ersten Anlagenniveaus, welche eingerichtet ist, den Feststoffteil auf das mindestens eine zweite Anlagenniveau zu transportieren und die dabei freiwerdende potentielle Energie des Feststoffteils zumindest teilweise in elektrische Energie umzuwandeln, und/oder
- mindestens ein Rohrleitungssystem, welches eingerichtet ist, den Flüssigteil zur weiteren Verwendung zumindest teilweise der Mine wieder zuzuführen und/oder den Flüssigteil zumindest teilweise vom ersten Anlagenniveau auf das mindestens eine zweite Anlagenniveau zu transportieren, wobei das Rohrleitungssystem mindestens eine Generatorstation mit einer von dem Flüssigteil antreibbaren Strömungsmaschine umfasst, welche mit einem Generator zum Erzeugen weiterer elektrischer Energie verbunden ist.

Die Aufgabe wird für das Verfahren zum Transportieren mindestens eines Teils eines Abbau- oder Abfallprodukts einer Mine von einem ersten Anlagenniveau über eine Gefällestrecke auf mindestens ein tiefer gelegenes zweites Anlagenniveau, wobei das Abbau- oder Abfallprodukt auf dem ersten Anlagenniveau in Form einer Suspension vorliegt, mit folgenden Schritten gelöst:
- Trennen der Suspension in einen überwiegend Feststoff enthaltenden Feststoffteil und einen überwiegend Flüssigkeit enthaltenden Flüssigteil im Bereich des ersten Anlagenniveaus, sowie
- Aufgabe des Feststoffteils auf mindestens eine mechanische Fördereinrichtung ausgehend vom ersten Anlagenniveau, welche den Feststoffteil auf das mindestens eine zweite Anlagenniveau transportiert und die dabei freiwerdende potentielle Energie des Feststoffteils in elektrische Energie umwandelt, und/oder
- zumindest teilweises Wiederverwenden des Flüssigteils im Bereich der Mine und/oder zumindest teilweises Transportieren des Flüssigteils vom ersten Anlagenniveau auf das mindestens eine zweite Anlagenniveau, wobei mittels des Flüssigteils eine mit einem Generator verbundene Strömungsmaschine angetrieben wird, so dass durch den Generator weitere elektrische Energie erzeugt wird.

Eine derartige Anlage bzw. ein derartiges Verfahren hat den Vorteil, dass aufgrund der Trennung der Suspension, beispielweise in Form von Wertstoff- oder Erzpulpe oder von "tailings", in Feststoff und Flüssigkeit und des im wesentlichen getrennten Transports von Feststoff und Flüssigkeit einerseits ein abrasiver Verschleiß an vormals mit der Suspension damit in Kontakt gelangenden Bauteilen, insbesondere im Bereich eines Rohrleitungssystems, durch welches vormals die Suspension geleitet wurde, insbesondere im Bereich einer gegebenenfalls vorhandenen Generatorstation, minimiert wird. Andererseits kann der abgetrennte Flüssigteil schnell und unkompliziert zumindest teilweise im Bereich der Mine wiederverwendet werden.

Dies spart Energie- und/oder Rohstoffkosten und schont die Ressourcen. Beispielsweise führt eine Rückführung des Flüssigteils in Form von Wasser, das im Bereich einer Mine häufig zur Bildung von Suspensionen eingesetzt wird, zu einer deutlichen Einsparung von Frischwasser und aufgrund der in den letzten Jahren merklich angestiegen Wasserpreise zu einer merklichen Kostensenkung. Die gewonnene elektrische Energie, die durch Generatoren, die mittels mechanischer Fördereinrichtungen und gegebenenfalls zusätzlich durch Generatorstationen im Bereich des Rohrleitungssystems bereitgestellt wird, ist für den Minenbetrieb nutzbar und senkt die Kosten für den Energieverbrauch. So kann die gewonnene elektrische Energie beispielsweise für das Pumpen des Flüssigteils zurück zur Mine eingesetzt werden. Durch die mehrmalige Nutzung des Flüssigteils von "tailings" kann beispielsweise auch eine Speicherkapazität eines sogenannten "tailing dams" reduziert werden.

Eine mechanische Fördereinrichtung, wie sie hier gegebenenfalls für die erfindungsgemäße Anlage eingesetzt ist, benötigt prinzipiell keinen eigenen elektrischen Antrieb und verbraucht in der Regel selbst keine elektrische Energie. Allerdings kann für einen Notbetrieb durchaus ein Hilfsantrieb für die mechanische Fördereinrichtung vorgesehen sein. Stückiges Material oder Schüttgut, wie z.B. abgebauter Wertstoff mit einem Anteil an Restfeuchte, das damit von einem höher gelegenen Anlagenniveau an mindestens einen tiefer gelegenen Ort transportiert wird, wird in der Regel allein aufgrund der Schwerkraft nach unten befördert. Dabei wird das stückige Material oder Schüttgut direkt auf ein umlaufendes Förderband oder auch in Kammern eines umlaufenden Bandes oder einer umlaufenden Kette gefüllt, ähnlich wie bei einem Wasserrad, wobei das Eigengewicht des Materials oder Schüttguts dazu führt, dass das dieses zusammen mit dem umlaufenden Förderband bzw. der Kette nach unten sinkt und das Band oder die Kette dabei antreibt und in Rotation versetzt. Die im Material oder Schüttgut gespeicherte potentielle Energie wird dabei frei, wobei die potentielle Energie hier im abgetrennten Feststoffteil gespeichert ist. Das Band oder die Kette der Fördereinrichtung ist mit mindestens einem Generator gekoppelt, der bei einer Bewegung des Bands oder der Kette von dieser angetrieben wird und elektrische Energie erzeugt. Die erzeugte elektrische Energie steht für eine Nutzung, insbesondere im Bereich der Mine, zur Verfügung. Eine derartige Fördereinrichtung ist beispielsweise aus der US 4,022,336 bereits hinreichend bekannt.

Hinsichtlich der bevorzugten Anordnung und Ausgestaltung des gegebenenfalls vorhandenen Rohrleitungssystems und den gegebenenfalls im Zusammenhang damit vorhandenen Generatorstation(en) wird auf die WO 2009/092633 A2 verwiesen. Insbesondere hat es sich bewährt, wenn zwei benachbarte Generatorstationen in einem Abstand von 500 bis 1000 Höhenmetern voneinander beabstandet angeordnet werden, um die potentielle Energie des Flüssigteils optimal zur Erzeugung von elektrischer Energie zu nutzen.

In einer besonders bevorzugten Ausgestaltung der Anlage ist sowohl mindestens eine mechanische Fördereinrichtung wie auch mindestens ein Rohrleitungssystem vorhanden, über welche sich jeweils elektrische Energie erzeugen lässt. Je mehr elektrische Energie erzeugt werden kann, desto geringer ist der Bedarf der Mine an Fremdenergie, die zugekauft werden muss.

Bevorzugt umfasst die mindestens eine Trennvorrichtung mindestens eine Filtrationseinrichtung, insbesondere in Form einer Filterpresse und/oder eines Vakuumfilters und/oder einer Bandsiebanlage. Derartige Filtrationseinrichtungen gewährleisten, dass die Restfeuchte des Feststoffteils unter etwa 10 Gew.-% liegt und der Flüssigteil einen verbliebenen Feststoffanteil von kleiner als 1 Gew.-%, insbesondere im Bereich von 0,01 Gew.-% aufweist. Je geringer der verbliebene Feststoffanteil im Flüssigteil ausgebildet werden kann, desto geringer ist der auftretende abrasive Verschleiß an damit in Kontakt kommenden Bauteilen im Bereich des Rohrleitungssystems.

Weiterhin hat es sich bewährt, wenn die mindestens eine Trennvorrichtung mindestens eine Zentrifuge und/oder einen Hydrozyklon umfasst. Dabei kann mit einer Zentrifuge ein ähnlich guter Trennerfolg erzielt werden wie mit einer Filtrationseinrichtung, während bei einem Hydrozyklon der Trennerfolg geringer ist.

Aber auch andere Trennaggregate, die für eine Fest-Flüssig-Trennung eingerichtet sind, d.h. den Feststoffanteil der Suspension im Wesentlichen von der flüssigen Phase abzutrennen in der Lage sind, sind für einen Einsatz im Bereich der mindestens einen Trennvorrichtung geeignet.

Die Suspension wird bei dem erfindungsgemäßen Verfahren demnach im Bereich des ersten Anlagenniveaus zum Trennen in den Feststoffteil und den Flüssigteil bevorzugt filtriert. Alternativ oder in Kombination dazu wird die Suspension im Bereich des ersten Anlagenniveaus zum Trennen in den Feststoffteil und den Flüssigteil vorzugsweise zentrifugiert oder zykloniert.

So hat es sich weiterhin bewährt, wenn die mindestens eine Trennvorrichtung mindestens ein Absetzbecken zur Aufnahme der Suspension umfasst. Im Absetzbecken sedimentiert der in der Suspension enthaltene Feststoff und konzentriert sich im Bodenbereich des Absetzbeckens. Das Absetzverhalten des Feststoffs kann durch Zugabe von chemischen Additiven, welche zu einer Beschleunigung des Sedimentationsvorgangs führen, verbessert werden. Der Trennerfolg ist hier vergleichbar mit dem eines Hydrozyklons.

Gemäß dem erfindungsgemäßen Verfahren hat es sich also bewährt, wenn die Suspension im Bereich des ersten Anlagenniveaus einer Sedimentation unterzogen wird. Dieser Vorgang benötigt keinen Einsatz von Energie und kann besonders kostengünstig und wartungsarm erfolgen.

Dabei umfasst die mindestens eine Trennvorrichtung in einer weiteren bevorzugten Ausgestaltung der Erfindung mindestens ein Absetzbecken zur Aufnahme der Suspension und dem Absetzbecken nachgeschaltet mindestens eine Filtrationseinrichtung und/oder mindestens eine Zentrifuge und/oder mindestens einen Hydrozyklon. Auch kann ein Hydrozyklon hier alternativ zum Absetzbecken vorgesehen werden, dem mindestens eine Filtrationseinrichtung oder mindestens eine Zentrifuge nachgeschaltet werden.

In einer bevorzugten Ausgestaltung des Verfahrens wird die Suspension zuerst dem mindestens einen Absetzbecken zugeführt, in dessen Bodenbereich sich ein erstes Zwischenprodukt umfassend überwiegend Feststoff der Suspension sammelt, wobei das erste Zwischenprodukt aus dem Bodenbereich des mindestens einen Absetzbeckens in mindestens eine Filtrationseinrichtung und/oder mindestens eine Zentrifuge und/oder mindestens einen Hydrozyklon überführt wird, wobei das erste Zwischenprodukt in den Feststoffteil und ein zweites Zwischenprodukt getrennt wird, und dass aus dem zweiten Zwischenprodukt und einem Überlauf des mindestens einen Absetzbeckens der Flüssigteil gebildet wird. Nachdem sowohl eine Filtrationseinrichtung wie auch eine Zentrifuge oder ein Hydrozyklon üblicherweise unter Einsatz von elektrischer Energie betrieben werden müssen, ist es vorteilhaft, nicht die gesamte Menge an Suspension über diese Trennaggregate zu führen. Eine Vortrennung der Suspension über ein Absetzbecken minimiert die Menge an Suspension, die über die energieverbrauchenden Trennaggregate geführt werden soll und senkt somit den Energieverbrauch der Mine zusätzlich. Auch hier kann alternativ zum Absetzbecken ein Hydrozyklon eingesetzt werden.

Eine Verwendung von elektrischer Energie, welche mittels des erfindungsgemäßen Verfahrens erzeugt wird, zur Bereitstellung von mindestens 5%, insbesondere 10%, des Gesamtenergiebedarfs der Mine, ist ideal.

Vorzugsweise wird die elektrische Energie zur Dampferzeugung, zum Betreiben einer Filtrationseinrichtung, einer Zentrifuge, eines Hydrozyklons, zum Pumpen zumindest eines Bruchteils des abgetrennten Flüssigteils zurück zur Mine und dergleichen eingesetzt.

Die Figuren 1 bis 6 sollen verschiedene Anlagen und Verfahren gemäß der Erfindung beispielhaft erläutern. So zeigt
- FIG 1: schematisch eine erste Anlage und ein erstes Verfahren,
- FIG 2: schematisch die erste Anlage, wobei die Trennvorrichtung im Detail dargestellt ist,
- FIG 3: schematisch eine zweite Anlage und ein zweites Verfahren,
- FIG 4: schematisch die zweite Anlage, wobei die Trennvorrichtung im Detail dargestellt ist,
- FIG 5: schematisch eine dritte Anlage und ein drittes Verfahren, und
- FIG 6: schematisch die dritte Anlage, wobei die Trennvorrichtung im Detail dargestellt ist.

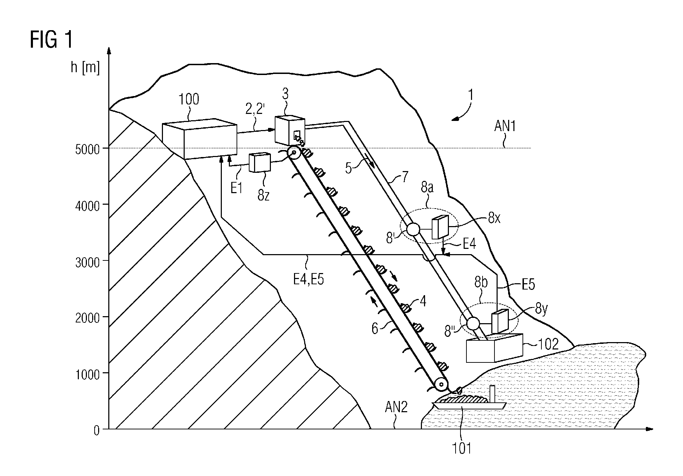

FIG 1 zeigt schematisch eine erste Anlage 1 und ein im Bereich der ersten Anlage 1 durchgeführtes erstes Verfahren. Die Anlage 1 ist zum Transportieren eines Abbau- oder Abfallprodukts 2 einer Mine 100 von einem ersten Anlagenniveau AN1 in einer Höhe von ca. 5000m über dem Meeresspiegel über eine Gefällestrecke auf ein tiefer gelegenes zweites Anlagenniveau AN2 auf etwa Meereshöhe eingerichtet. Dabei liegt das Abbau-oder Abfallprodukt 2 auf dem ersten Anlagenniveau AN1 in Form einer Suspension 2' vor. Diese wird einer Trennvorrichtung 3 zum Trennen der Suspension 2' in einen überwiegend Feststoff enthaltenden Feststoffteil 4 und einen überwiegend Flüssigkeit enthaltenden Flüssigteil 5 im Bereich des ersten Anlagenniveaus AN1 zugeführt. Weiterhin umfasst die Anlage 1 eine mechanische Fördereinrichtung 6 zur Aufnahme des Feststoffteils 4 im Bereich des ersten Anlagenniveaus AN1, welche eingerichtet ist, den Feststoffteil 4 auf das zweite Anlagenniveau AN2 zu transportieren. Die dabei freiwerdende potentielle Energie des Feststoffteils 4 wird in elektrische Energie E1 umgewandelt. Dazu ist die Fördereinrichtung 6 als Bandförderer ausgebildet, wobei das Band einen Generator 8z antreibt. Die mittels des Gerators 8z erzeugte elektrische Energie E1 wird hier der Mine 100 zugeführt. Der Feststoffteil 4, hier in Form von Erzmineral, gelangt von der Fördereinrichtung 6 unmittelbar auf ein Frachtschiff 101, mit welchem dieser zu einer Aufbereitungsanlage befördert wird.

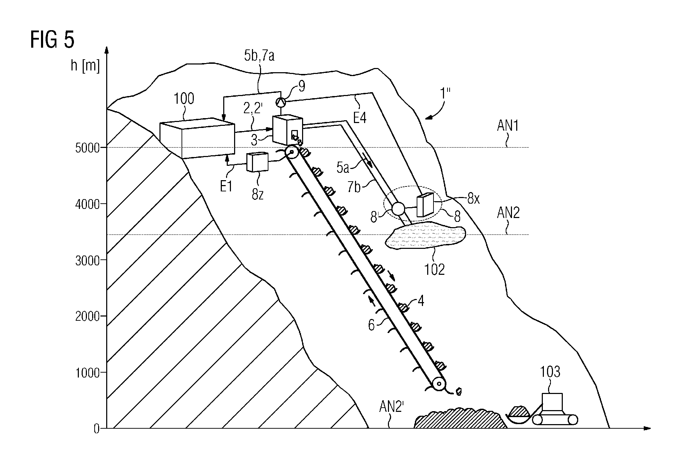

Weiterhin umfasst die Anlage 1 ein Rohrleitungssystem 7, welches eingerichtet ist, den Flüssigteil 5 vom ersten Anlagenniveau AN1 auf das zweite Anlagenniveau AN2 zu transportieren. Selbstverständlich ist es hier lediglich optional, dass der Feststoffteil 4 und der Flüssigteil 5 auf das auf gleiche zweite Anlagenniveau AN2 transportiert werden. Ebenso können der Feststoffteil 4 und der Flüssigteil 5 auf unterschiedliche zweite Anlagenniveaus transportiert werden, wie in FIG 5 dargestellt.

Dabei umfasst das Rohrleitungssystem 7 zwei Generatorstationen 8a, 8b mit je einer von dem Flüssigteil 5 antreibbaren Strömungsmaschine 8', 8", welche je mit einem Generator 8x, 8y zum Erzeugen weiterer elektrischer Energie E4, E5 verbunden sind. Die weitere elektrische Energie E4, E5 wird ebenfalls der Mine 100 zugeführt. Der Flüssigteil 5 wird in ein Staubecken 102 geleitet, von wo die Flüssigkeit, üblicherweise in Form von Wasser, verdampfen kann.

Alternativ zu der Ausführungsform der Anlage gemäß FIG 1 kann hier auch auf die mechanische Fördereinrichtung verzichtet werden und lediglich das Rohrleitungssystem vorhanden sein. Der Feststoffteil, beispielsweise Feststoffe aus Abfallprodukten, von denen der Wertstoff bereits abgetrennt wurde, können im Bereich der Mine abgelagert werden, beispielsweise um entstandene Gruben oder Stollen im Bereich der Mine wieder zu verfüllen.

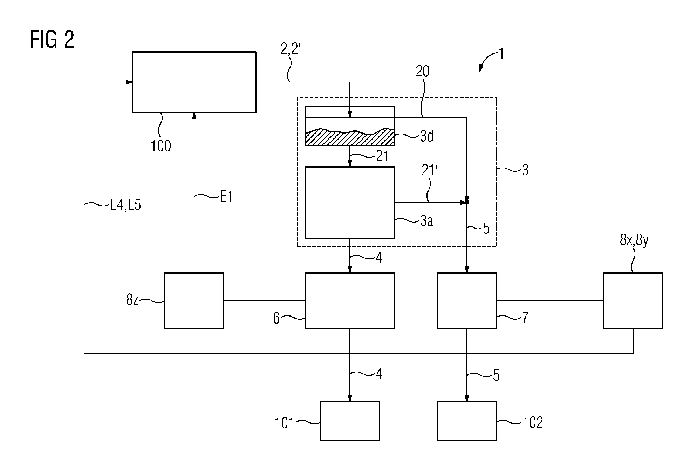

FIG 2 zeigt schematisch und beispielhaft die erste Anlage 1 mit detaillierter Darstellung im Bereich der Trennvorrichtung 3. Gleiche Bezugszeichen wie in FIG 1 bezeichnen gleiche Elemente. Die Trenneinrichtung 3 umfasst hier ein Absetzbecken 3d, in welches die Suspension 2' eingeleitet wird. Im Bodenbereich des Absetzbeckens 3d sammelt sich ein erstes Zwischenprodukt 21 umfassend überwiegend Feststoff der Suspension 2'. Dieses erste Zwischenprodukt 21 wird aus dem Bodenbereich des Absetzbeckens 3d in eine Filtrationseinrichtung 3a, hier in Form einer Filterpresse, überführt. Hier erfolgt eine weitere Trennung des ersten Zwischenprodukts 21 in den Feststoffteil 4 und ein zweites Zwischenprodukt 21'. Das zweite Zwischenprodukt 21' wird mit einem Überlauf 20 des Absetzbeckens 3d zu dem Flüssigteil 5 zusammengeführt.

Eine solche Trennvorrichtung 3 kann alternativ lediglich ein Absetzbecken 3d, lediglich eine Filtrationseinrichtung 3a, lediglich eine Zentrifuge oder lediglich einen Hydrozyklon umfassen. Anstelle oder nachfolgend zum Absetzbecken 3d gemäß FIG 2 kann eine Trennvorrichtung 3 mindestens einen Hydrozyklon umfassen. Weiterhin kann die Trennvorrichtung 3 anstelle der Filtrationseinrichtung 3a gemäß FIG 2 auch eine Zentrifuge umfassen. Diese Ausführungsformen wurden hier allerdings nicht im Detail dargestellt.

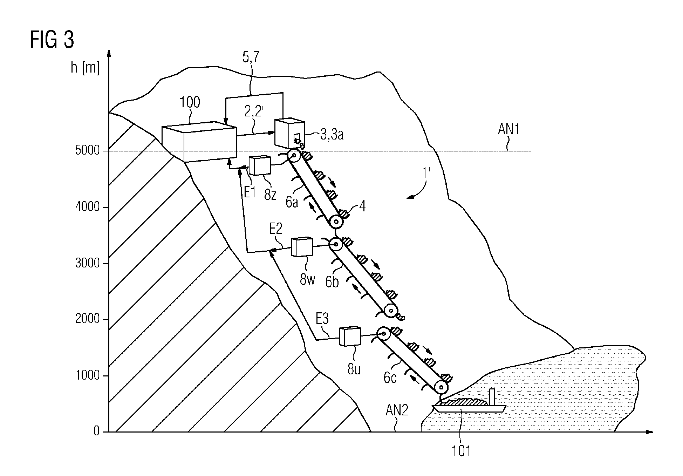

FIG 3 zeigt schematisch eine zweite Anlage 1' und ein im Bereich der zweiten Anlage 1' durchgeführtes zweites Verfahren. Gleiche Bezugszeichen wie in FIG 1 bezeichnen gleiche Elemente. Die zweite Anlage 1' ist ebenfalls zum Transportieren mindestens eines Teils eines Abbau- oder Abfallprodukts 2 einer Mine 100 von einem ersten Anlagenniveau AN1 über eine Gefällestrecke auf mindestens ein tiefer gelegenes zweites Anlagenniveau AN2 eingerichtet. Dabei liegt das Abbau- oder Abfallprodukt 2 auf dem ersten Anlagenniveau AN1 in Form einer Suspension 2' vor. Diese wird einer Trennvorrichtung 3 zum Trennen der Suspension 2' in einen überwiegend Feststoff enthaltenden Feststoffteil 4 und einen überwiegend Flüssigkeit enthaltenden Flüssigteil 5 im Bereich des ersten Anlagenniveaus AN1 zugeführt. Weiterhin umfasst die Anlage 1 eine mechanische Fördereinrichtung 6a, 6b, 6c zur Aufnahme des Feststoffteils 4 im Bereich des ersten Anlagenniveaus AN1, welche eingerichtet ist, den Feststoffteil 4 auf das mindestens eine zweite Anlagenniveau AN2 zu transportieren. Die dabei freiwerdende potentielle Energie des Feststoffteils 4 wird in elektrische Energie E1, E2, E3 umgewandelt. Dazu sind die Fördereinrichtungen 6a, 6b, 6c als Bandförderer ausgebildet, wobei jedes Band einen Generator 8z, 8w, 8u antreibt. Die mittels der Generatoren 8z, 8w, 8u erzeugte elektrische Energie E1, E2, E3 wird auch hier der Mine 100 zugeführt. Der Feststoffteil 4, hier in Form eines Erzminerals, gelangt von der Fördereinrichtung 6a, 6b, 6c unmittelbar auf ein Frachtschiff 101, mit welchem dieser zu einer Aufbereitungsanlage befördert wird.

Weiterhin umfasst die zweite Anlage 1' ein Rohrleitungssystem 7, welches eingerichtet ist, den Flüssigteil 5 zur weiteren Verwendung der Mine 100 wieder zuzuführen. Der Flüssigteil kann im Bereich der Mine 100 für einen, gegebenenfalls erneuten, Einsatz in Flotationsanlagen, Trommelmühlen und dergleichen vorgesehen werden.

Alternativ zu der Anlage gemäß FIG 3 könnte hier auch mindestens eine weitere mechanische Fördereinrichtung vorgesehen sein, die den Feststoffteil eines Abfallprodukts auf ein weiteres zweites Anlagenniveau transportiert, das zu dem zweiten Anlagenniveau AN2 unterschiedlich ist.

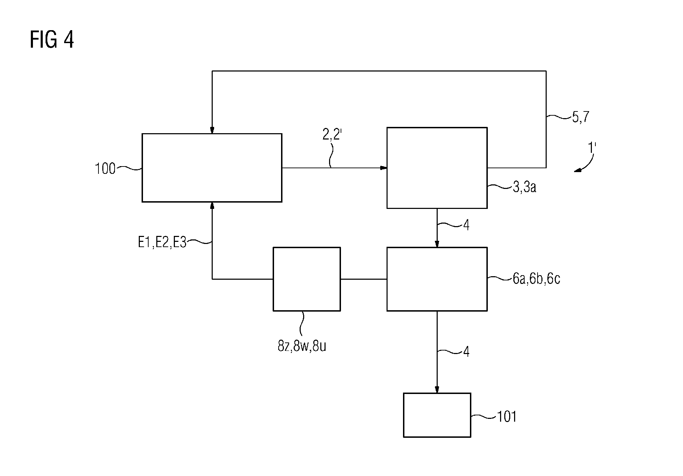

FIG 4 zeigt schematisch und beispielhaft die zweite Anlage 1' mit detaillierter Darstellung im Bereich der Trennvorrichtung 3. Gleiche Bezugszeichen wie in FIG 3 bezeichnen gleiche Elemente. Die Trenneinrichtung 3 umfasst hier lediglich eine Filtrationseinrichtung 3a, hier in Form einer Filterpresse, eines Vakuumfilters oder einer Bandsiebanlage.

Eine solche Trennvorrichtung 3 kann alternativ lediglich ein Absetzbecken, lediglich eine Zentrifuge oder lediglich einen Hydrozyklon umfassen. Weiterhin kann die Trennvorrichtung 3 Kombinationen von Trennaggregaten anstelle der Filtrationseinrichtung 3a umfassen. Diese Ausführungsformen wurden hier allerdings nicht im Detail dargestellt.

FIG 5 zeigt schematisch eine dritte Anlage 1" und ein im Bereich der dritten Anlage 1*''* durchgeführtes drittes Verfahren. Gleiche Bezugszeichen wie in FIG 1 oder FIG 3 bezeichnen gleiche Elemente. Die dritte Anlage 1" ist zum Transportieren eines Abbau- oder Abfallprodukts 2 einer Mine 100 von einem ersten Anlagenniveau AN1 in einer Höhe von ca. 5000m über dem Meeresspiegel über eine Gefällestrecke auf mindestens ein tiefer gelegenes zweites Anlagenniveau AN2, AN2' eingerichtet. Dabei liegt das Abbau- oder Abfallprodukt 2 auf dem ersten Anlagenniveau AN1 in Form einer Suspension 2' vor. Diese wird einer Trennvorrichtung 3 zum Trennen der Suspension 2' in einen überwiegend Feststoff enthaltenden Feststoffteil 4 und einen überwiegend Flüssigkeit enthaltenden Flüssigteil 5 im Bereich des ersten Anlagenniveaus AN1 zugeführt. Weiterhin umfasst die dritte Anlage 1" eine mechanische Fördereinrichtung 6 zur Aufnahme des Feststoffteils 4 im Bereich des ersten Anlagenniveaus AN1, welche eingerichtet ist, den Feststoffteil 4 auf das zweite Anlagenniveau AN2', das etwa auf Meereshöhe liegt, zu transportieren. Die dabei freiwerdende potentielle Energie des Feststoffteils 4 wird in elektrische Energie E1 umgewandelt. Dazu ist die Fördereinrichtung 6 als Bandförderer ausgebildet, wobei das Band einen Generator 8z antreibt. Die mittels des Gerators 8z erzeugte elektrische Energie E1 wird hier der Mine 100 zugeführt. Der Feststoffteil 4 gelangt von der Fördereinrichtung 6 unmittelbar auf einen Umschlagplatz, von dem ein Transportgerät 103 diesen aufnimmt und weiterbefördert.

Weiterhin umfasst die dritte Anlage 1*''* ein Rohrleitungssystem 7a, 7b, welches eingerichtet ist, den Flüssigteil 5a, 5b zur weiteren Verwendung über eine Pumpe 9 zumindest teilweise der Mine 100 wieder zuzuführen und/oder teilweise vom ersten Anlagenniveau AN1 auf das weitere zweite Anlagenniveau AN2 zu transportieren, wobei das Rohrleitungssystem 7a, 7b mindestens eine Generatorstation 8 mit einer von dem Flüssigteil 5b antreibbaren Strömungsmaschine 8' umfasst, welche mit einem Generator 8x zum Erzeugen weiterer elektrischer Energie E4 verbunden ist. Das zweite Anlagenniveau AN2' und das weitere zweite Anlagenniveau AN2 sind hier in unterschiedlicher Höhenlage gewählt. Die weitere elektrische Energie E4 wird hier der Pumpe 9 zugeführt. Der Flüssigteil 5b wird in einen Stausee 102 geleitet, von wo Flüssigkeit, üblicherweise in Form von Wasser, verdampfen kann. Die dritte Anlage 1" ist beispielsweise zum Transport der sogenannten "tailings" geeignet.

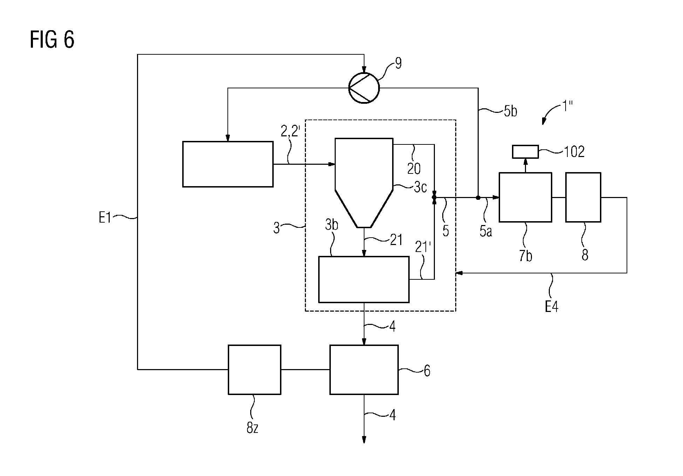

FIG 6 zeigt schematisch und beispielhaft die dritte Anlage 1" mit detaillierter Darstellung im Bereich der Trennvorrichtung 3. Gleiche Bezugszeichen wie in FIG 5 bezeichnen gleiche Elemente. Die Trenneinrichtung 3 umfasst hier einen Hydrozyklon 3c, in welchen die Suspension 2' eingeleitet wird. Im unteren Bereich des Hydrozyklons bildet sich ein erstes Zwischenprodukt 21 umfassend überwiegend Feststoff der Suspension 2'. Dieses erste Zwischenprodukt 21 wird aus dem unteren Bereich des Hydrozyklons 3c in eine Zentrifuge 3b überführt. Hier erfolgt eine weitere Trennung des ersten Zwischenprodukts 21 in den Feststoffteil 4 und ein zweites Zwischenprodukt 21'. Das zweite Zwischenprodukt 21' wird mit einem Überlauf 20 des Hydrozyklons 3c zu dem Flüssigteil 5 zusammengeführt.

Eine Trennvorrichtung 3 kann hier alternativ lediglich ein Absetzbecken, lediglich eine Filtrationseinrichtung 3a, lediglich eine Zentrifuge 3b oder lediglich einen Hydrozyklon 3c umfassen. Weiterhin kann die Trennvorrichtung 3 anstelle der Trennaggregate gemäß FIG 6 auch ein Absetzbecken oder eine Filtrationseinrichtung umfassen. Diese Ausführungsformen wurden hier allerdings nicht im Detail dargestellt.

Es hat sich demnach insgesamt bewährt, folgende Trennvorrichtungen für eine erfindungsgemäße Anlage vorzusehen:
- eine Trennvorrichtung lediglich in Form einer Filtrationseinrichtung, insbesondere in Form einer Filterpresse oder eines Vakuumfilters oder einer Bandsiebanlage;
- eine Trennvorrichtung in Form einer Zentrifuge,
- eine Trennvorrichtung umfassend ein Absetzbecken und eine dem Absetzbecken nachgeschaltete Filtrationseinrichtung oder Zentrifuge;
- eine Trennvorrichtung umfassend einen Hydrozyklon und eine diesem nachgeschaltete Filtrationseinrichtung oder Zentrifuge.

Diese Anordnungen gewährleisten einen hohen Trennerfolg verbunden mit minimiertem abrasivem Verschleiß im Bereich der Anlagenkomponenten.

Die Trenneinrichtungen gemäß der in den FIGen 1 bis 6 dargestellten Anlagen sowie von weiteren, hier nicht im Detail dargestellten Anlagen können mit den oben bevorzugt genannten Trennaggregaten oder Kombinationen von Trennaggregaten sowie weiteren, hier nicht aufgeführten Trennvorrichtungen und deren Kombinationen ausgestattet werden.

Ein Fachmann ist ohne weiteres in der Lage, weitere geeignete und hier nicht im Detail dargestellte Trennvorrichtungen umfassend mehrere unterschiedliche und/oder gleichartige Trennaggregate für eine Anlage und ein Verfahren gemäß der Erfindung vorzusehen. Dabei können von einem Fachmann im Bereich einer Anlage ohne Weiteres auch parallel mehrere mechanische Fördereinrichtungen, Rohrleitungssysteme, Trenneinrichtungen usw. eingesetzt werden, um parallel unterschiedlichste Abbau-oder Abfallprodukte zumindest zum Teil zu transportieren, ohne den Erfindungsgedanken zu verlassen.

## Patentansprüche

1. Anlage (1,1',1") zum Transportieren mindestens eines Teils eines Abbau- oder Abfallprodukts (2) einer Mine (100) von einem ersten Anlagenniveau (AN1) über eine Gefällestrecke auf mindestens ein tiefer gelegenes zweites Anlagenniveau (AN2,AN2'), wobei das Abbau- oder Abfallprodukt (2) auf dem ersten Anlagenniveau (AN1) in Form einer Suspension (2') vorliegt, umfassend
- mindestens eine Trennvorrichtung (3) zum Trennen der Suspension (2') in einen überwiegend Feststoff enthaltenden Feststoffteil (4) und einen überwiegend Flüssigkeit enthaltenden Flüssigteil (5) im Bereich des ersten Anlagenniveaus (AN1), sowie
- mindestens eine mechanische Fördereinrichtung (6,6a,6b,6c) zur Aufnahme des Feststoffteils (4) im Bereich des ersten Anlagenniveaus (AN1), welche eingerichtet ist, den Feststoffteil (4) auf das mindestens eine zweite Anlagenniveau (AN2) zu transportieren und die dabei freiwerdende potentielle Energie des Feststoffteils (4) zumindest teilweise in elektrische Energie (E1,E2,E3) umzuwandeln, und/oder
- mindestens ein Rohrleitungssystem (7,7a,7b), welches eingerichtet ist, den Flüssigteil (5,5a,5b) zur weiteren Verwendung zumindest teilweise der Mine (100) wieder zuzuführen und/oder den Flüssigteil (5,5a,5b) zumindest teilweise vom ersten Anlagenniveau (AN1) auf das mindestens eine zweite Anlagenniveau (AN2,AN2') zu transportieren, wobei das Rohrleitungssystem (7,7a,7b) mindestens eine Generatorstation (8,8a,8b) mit einer von dem Flüssigteil (5,5a,5b) antreibbaren Strömungsmaschine (8',8 ") umfasst, welche mit einem Generator (8x,8y) zum Erzeugen weiterer elektrischer Energie (E4,E5) verbunden ist.

2. Anlage nach Anspruch 1,
**dadurch gekennzeichnet, dass** die mindestens eine Trennvorrichtung (3) mindestens eine Filtrationseinrichtung (3a), insbesondere eine Filterpresse und/oder einen Vakuumfilter und/oder eine Bandsiebanlage, umfasst.

3. Anlage nach Anspruch 1 oder Anspruch 2,
**dadurch gekennzeichnet, dass** die mindestens eine Trennvorrichtung (3) mindestens eine Zentrifuge (3b) und/oder mindestens einen Hydrozyklon (3c) umfasst.

4. Anlage nach einem der Ansprüche 1 bis 3,
**dadurch gekennzeichnet, dass** die mindestens eine Trennvorrichtung (3) mindestens ein Absetzbecken (3d) zur Aufnahme der Suspension (2') umfasst.

5. Anlage nach einem der Ansprüche 1 bis 4,
**dadurch gekennzeichnet, dass** die mindestens eine Trennvorrichtung (3) mindestens ein Absetzbecken (3d) zur Aufnahme der Suspension (2') und dem Absetzbecken (3d) nachgeschaltet mindestens eine Filtrationseinrichtung (3a) und/oder mindestens eine Zentrifuge (3b) und/oder mindestens einen Hydrozyklon (3c) umfasst.

6. Verfahren zum Transportieren mindestens eines Teils eines Abbau- oder Abfallprodukts (2) einer Mine (100) von einem ersten Anlagenniveau (AN1) über eine Gefällestrecke auf mindestens ein tiefer gelegenes zweites Anlagenniveau (AN2,AN2'), wobei das Abbau- oder Abfallprodukt (2) auf dem ersten Anlagenniveau (AN1) in Form einer Suspension (2') vorliegt, mit folgenden Schritten:
- Trennen der Suspension (2') in einen überwiegend Feststoff enthaltenden Feststoffteil (4) und einen überwiegend Flüssigkeit enthaltenden Flüssigteil (5,5a,5b) im Bereich des ersten Anlagenniveaus (AN1), sowie
- Aufgeben des Feststoffteils (4) auf mindestens eine mechanische Fördereinrichtung (6,6a,6b,6c) ausgehend vom ersten Anlagenniveau (AN1), welche den Feststoffteil (4) auf das mindestens eine zweite Anlagenniveau (AN2) transportiert und die dabei freiwerdende potentielle Energie des Feststoffteils (4) zumindest teilweise in elektrische Energie (E1,E2,E3) umwandelt, und/oder
- zumindest teilweises Wiederverwenden des Flüssigteils (5,5a) im Bereich der Mine (100) und/oder zumindest teilweises Transportieren des Flüssigteils (5,5b) vom ersten Anlagenniveau (AN1) auf das mindestens eine zweite Anlagenniveau (AN2,AN2'), wobei mittels des Flüssigteils (5,5b) mindestens eine mit einem Generator (8x,8y) verbundene Strömungsmaschine (8',8 ") angetrieben wird, so dass durch den Generator (8x,8y) weitere elektrische Energie (E4,E5) erzeugt wird.

7. Verfahren nach Anspruch 6,
**dadurch gekennzeichnet, dass** die Suspension (2') im Bereich des ersten Anlagenniveaus (AN1) zum Trennen in den Feststoffteil (4) und den Flüssigteil (5,5a,5b) mindestens einer Trennvorrichtung (3) in Form einer Filtrationseinrichtung (3a), insbesondere einer Filterpresse und/oder einer Bandsiebanlage, zugeführt wird.

8. Verfahren nach Anspruch 6 oder Anspruch 7,
**dadurch gekennzeichnet, dass** die Suspension (2') im Bereich des ersten Anlagenniveaus (AN1) zum Trennen in den Feststoffteil (4) und den Flüssigteil (5,5a,5b) mindestens einer Trennvorrichtung (3) in Form einer Zentrifuge (3b) und/oder eines Hydrozyklons (3c) zugeführt wird.

9. Verfahren nach einem der Ansprüche 6 bis 8,
**dadurch gekennzeichnet, dass** die Suspension (2') im Bereich des ersten Anlagenniveaus (AN1) mindestens einer Trennvorrichtung (3) in Form eines Absetzbeckens (3d) zugeführt wird.

10. Verfahren nach Anspruch 9,
**dadurch gekennzeichnet, dass** die Suspension (2') zuerst dem mindestens einen Absetzbecken (3d) zugeführt wird, in dessen Bodenbereich sich ein erstes Zwischenprodukt (21) umfassend überwiegend Feststoff der Suspension sammelt, dass das erste Zwischenprodukt (21) aus dem Bodenbereich des mindestens einen Absetzbeckens (3d) in mindestens eine Filtrationseinrichtung (3a) und/oder eine Zentrifuge (3b) und/oder einen Hydrozyklon (3c) überführt wird, dass das erste Zwischenprodukt (21) in den Feststoffteil und (4) ein zweites Zwischenprodukt (21') getrennt wird, und dass aus dem zweiten Zwischenprodukt (21') und einem Überlauf (20) des mindestens einen Absetzbeckens (3d) der Flüssigteil (5) gebildet wird.

11. Verwendung von elektrischer Energie (E1,E2,E3,E4,E5), welche mittels eines Verfahrens nach einem der Ansprüche 6 bis 10 erzeugt wird, zur Bereitstellung von mindestens 5% eines Gesamtenergiebedarfs einer Mine (100).

12. Verwendung nach Anspruch 11,
**dadurch gekennzeichnet, dass** mindestens 10% des Gesamtenergiebedarfs der Mine (100) bereitgestellt wird.

13. Verwendung nach Anspruch 11 oder Anspruch 12,
**dadurch gekennzeichnet, dass** die elektrische Energie (E1,E2,E3,E4,E5) zur Dampferzeugung eingesetzt wird.

14. Verwendung nach Anspruch 11 oder Anspruch 12,
**dadurch gekennzeichnet, dass** die elektrische Energie (E1,E2,E3,E4,E5) zum Betreiben der mindestens einen Filtrationseinrichtung (3a) und/oder der mindestens einen Zentrifuge (3b) und/oder des mindestens einen Hydrozyklons (3c) eingesetzt wird.

15. Verwendung einer Anlage nach einem der Ansprüche 1 bis 5 zum Transportieren mindestens eines Teils eines Abbau- oder Abfallprodukts (2) einer Mine in Form einer Suspension, insbesondere einer Erzpulpe oder von tailings, von einem ersten Anlagenniveau (AN1) über eine Gefällestrecke auf mindestens ein tiefer gelegenes zweites Anlagenniveau (AN2,AN2'), wobei elektrische Energie erzeugt wird.
